# DEMANDE DE BREVET EUROPEEN

(11) **EP 1 693 677 A1**
(43) Date de publication de la demande: **23.08.2006**
(21) Numéro de dépôt: 06290075.8
(22) Date de dépôt: 12.01.2006
(51) Int. Cl.: G01P 3/44, G01D 5/12, G01D 5/14, G01P 3/56

(54) **Dispositif de détection des paramètres de rotation de deux éléments**

(30) Priorité: 16.02.2005 FR 0501576
(71) Demandeur: Aktiebolaget SKF, 415 50 Göteborg (SE)
(72) Inventeur: Landrieve, Franck, 37230 Fondettes (FR)
(74) Mandataire: Casalonga, Axel

(57) **Abrégé**

Dispositif de détection de paramètres de rotation de deux éléments tournants coaxiaux et susceptibles d'avoir un déplacement angulaire relatif autour dudit axe, le dispositif comprenant deux groupes d'éléments capteurs 15, 16 en vue de la détection dudit déplacement angulaire de chaque élément, les deux groupes d'éléments capteurs étant logés dans un même bloc capteur 11 non tournant, chaque groupe d'éléments capteurs 15, 16 coopérant avec un anneau codeur 9, 10 monté sur l'un des éléments tournants, les deux anneaux étant distincts et indépendants l'un de l'autre et pouvant se déplacer angulairement l'un par rapport à l'autre autour de l'axe géométrique desdits éléments tournants.

## Description

La présente invention concerne le domaine des capteurs de rotation utilisés pour détecter et mesurer les déplacements angulaires absolus ou relatifs de deux éléments susceptibles d'avoir des vitesses et/ou des déplacements angulaires différents.

La détection et la mesure du déplacement angulaire d'un élément tournant par rapport à un élément fixe peut se faire, de façon connue en soi, au moyen d'un anneau multipolaire solidaire de la partie tournante coopérant avec des cellules à effet Hall montées sur une partie fixe du dispositif. L'on peut, par exemple, au moyen d'un roulement instrumenté, monté entre un arbre tournant et un logement fixe, détecter et mesurer les déplacements angulaires de l'arbre par rapport au logement fixe. On peut se reporter au document FR-A-2 857 743 concernant un système de mesure de rotation monté sur un roulement.

Or, dans les dispositifs mécaniques comportant plusieurs organes tournants montés de façon coaxiale, par exemple pourvus d'un arbre creux, et dont on veut détecter et mesurer les déplacements angulaires, l'on peut envisager d'équiper ces dispositifs mécaniques de plusieurs roulements instrumentés et de traiter ensuite dans un système d'exploitation extérieur les signaux recueillis. Toutefois, le fait de monter plusieurs roulements instrumentés dans un dispositif mécanique, conduit à un coût élevé, à une mise en place parfois difficile et à un encombrement relativement important.

L'invention se propose de remédier à ces inconvénients.

L'invention propose un dispositif de détection compact et économique, adapté à la détection de paramètres de rotation d'une pluralité d'organes mécaniques coaxiaux.

Le dispositif de détection de paramètres de rotation de deux éléments tournants coaxiaux susceptibles d'avoir un déplacement angulaire relatif autour dudit axe, comprend deux groupes d'éléments capteurs en vue de la détection du déplacement angulaire de chaque élément, les deux groupes d'éléments capteurs étant logés dans un même bloc capteur non tournant, chaque groupe d'éléments capteurs coopérant avec un anneau codeur monté sur l'un des éléments tournants, les deux anneaux étant distincts et indépendants l'un de l'autre et pouvant se déplacer angulairement l'un par rapport à l'autre autour de l'axe géométrique des éléments tournants.

Un groupe d'éléments capteurs comprend au moins un élément capteur et peut en comprendre deux si l'on souhaite une redondance de la détection de vitesse ou encore une détection du sens de rotation en décalant angulairement les éléments capteurs ou les pôles du codeur de façon judicieuse, voire un plus grand nombre.

Dans un mode de réalisation de l'invention, le bloc capteur est monté sur une bague d'un roulement. Un premier anneau codeur peut être monté sur l'autre bague du roulement et un second anneau codeur peut être monté sur un élément extérieur au roulement. L'élément extérieur peut être un arbre ou encore un deuxième roulement. Dans ce cas, le deuxième codeur peut être monté sur l'une des bagues du deuxième roulement.

Un premier anneau codeur peut être monté sur l'une des bagues d'un deuxième roulement, tandis que le deuxième anneau codeur est monté sur l'autre bague du deuxième roulement.

Dans un autre mode de réalisation, le bloc capteur est monté sur un élément non tournant. Un anneau codeur peut être monté sur l'une des bagues d'un roulement et un deuxième anneau codeur est monté sur l'autre bague du roulement. Un autre roulement peut être disposé entre ledit élément non tournant et un élément tournant supportant l'une des bagues du deuxième roulement.

Un anneau codeur peut être monté sur un premier arbre tournant autour d'un axe géométrique et un deuxième anneau codeur peut être monté sur un deuxième arbre tournant autour du même axe géométrique.

Dans un mode de réalisation, les groupes d'éléments capteurs sont reliés électriquement à un circuit de traitement des signaux émis par les capteurs. Le circuit de traitement des signaux peut se présenter sous la forme d'au moins un circuit imprimé sur au moins une carte intégrée au bloc capteur. La carte peut être entièrement noyée dans le bloc capteur en vue d'une protection efficace.

Dans un mode de réalisation, les éléments capteurs sont de type magnétosensible et les anneaux codeurs sont multipolaires. Les éléments capteurs peuvent comprendre des cellules à effet Hall.

Avantageusement, le bloc capteur comprend une pièce en matériau synthétique, dans laquelle sont montés les groupes de capteurs de façon affleurante ou non-affleurante, noyés dans le matériau synthétique à proximité d'un alésage ou encore d'une surface radiale du bloc capteur. Le bloc capteur peut se compléter par une coupelle métallique de support assurant son accrochage sur une bague de roulement ou un logement de roulement. Le bloc capteur peut comprendre un terminal de sortie de fils électriquement relié audit groupe d'éléments capteurs.

L'invention concerne également un ensemble mécanique pourvu de deux arbres tournant autour d'un même axe géométrique et susceptibles d'avoir un déplacement angulaire relatif autour dudit axe, et un dispositif de détection de paramètres de rotation comprenant au moins deux éléments capteurs en vue de la détection du déplacement angulaire de chaque arbre. Le dispositif comprend également un bloc capteur non tournant, dans lequel sont logés lesdits deux éléments capteurs. Chaque élément capteur coopère avec un anneau codeur monté sur l'un des arbres tournants. Chaque anneau codeur est distinct et indépendant de l'autre et peut se déplacer angulairement par rapport à l'autre autour de l'axe géométrique desdits arbres tournants.

On bénéficie de la sorte d'un dispositif simple et compact, capable de détecter la vitesse de deux éléments concentriques tournants par rapport à un élément non tournant, et ce au moyen d'un bloc capteur unique, ce qui réduit considérablement l'encombrement de l'ensemble mécanique de même que le nombre de fils qui doit y être disposé.

Dans un mode de réalisation, le dispositif est associé à un roulement pour former un roulement instrumenté, un codeur supplémentaire y étant associé. Avant le montage dans l'ensemble mécanique auquel il est destiné, le codeur supplémentaire est maintenu avec le roulement instrumenté par l'attraction magnétique que les pôles d'une première polarité du codeur du roulement instrumenté exerce sur les pôles d'une deuxième polarité du codeur supplémentaire. Le roulement instrumenté peut ainsi être manipulé et transporté avec des risques très réduits de perte du codeur supplémentaire et en l'absence d'un élément mécanique supplémentaire, par exemple de type jetable, permettant d'attacher de façon temporaire le codeur supplémentaire au roulement instrumenté proprement dit. En d'autres termes, l'invention peut concerner un roulement comprenant deux bagues, des éléments roulants et un dispositif de détection de paramètres de rotation de deux éléments tournants coaxiaux susceptibles d'avoir un déplacement angulaire relatif autour dudit axe, le dispositif comprenant deux groupes d'éléments capteurs en vue de la détection du déplacement angulaire de chaque élément, les deux groupes d'éléments capteurs étant logés dans un même bloc capteur non tournant, chaque groupe d'éléments capteurs coopérant avec un anneau codeur, les deux anneaux étant distincts et indépendants l'un de l'autre et étant maintenus en contact avant montage par attraction magnétique.

La présente invention sera mieux comprise à l'étude de la description détaillée de quelques modes de réalisation pris à titre d'exemples nullement limitatifs et illustrés par les dessins annexés, sur lesquels:
- la figure 1 est une vue en coupe axiale d'un ensemble mécanique selon un premier mode de réalisation;
- la figure 2 est une vue du roulement instrumenté de la figure 1 avant montage;
- la figure 3 est une demi-vue en coupe axiale d'un ensemble mécanique selon un deuxième mode de réalisation;
- la figure 4 est une demi-vue en coupe axiale d'un ensemble mécanique selon un troisième mode de réalisation;
- la figure 5 est une demi-vue en coupe axiale d'un ensemble mécanique selon un quatrième mode de réalisation; et
- la figure 6 est une demi-vue en coupe axiale d'un ensemble mécanique selon un cinquième mode de réalisation.

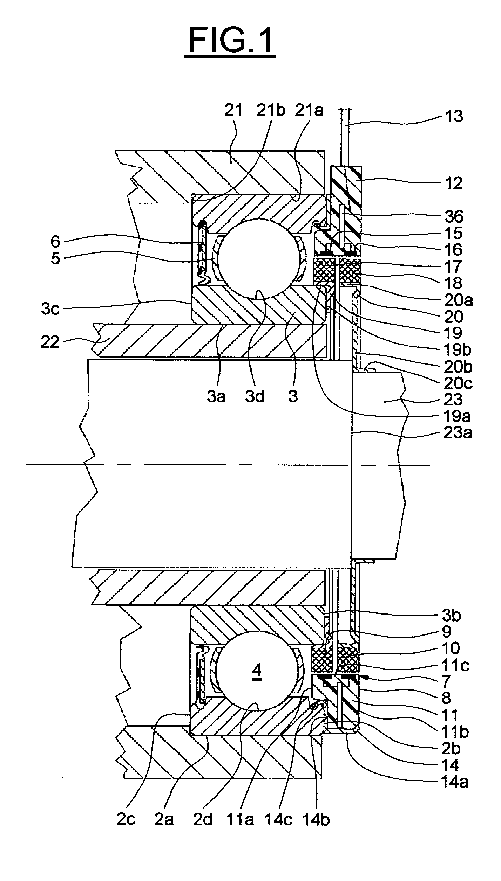

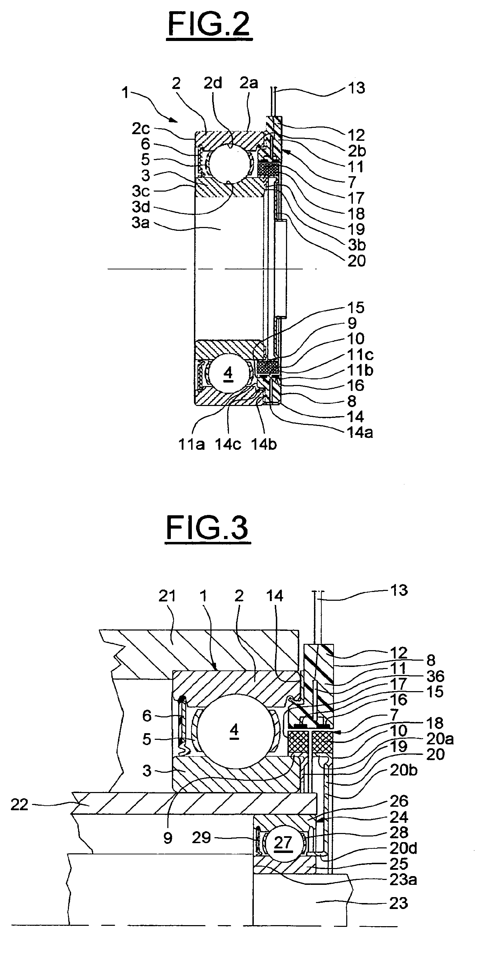

Comme on peut le voir sur les figures 1 et 2, le roulement instrumenté 1 comprend une bague extérieure 2 pourvue d'une surface extérieure cylindrique 2a, de deux surfaces frontales radiales 2b et 2c et d'un alésage dans lequel est formé par usinage avec enlèvement de copeaux un chemin de roulement toroïdal 2d, une bague intérieure 3 comprenant un alésage 3a, des surfaces frontales radiales 3b et 3c respectivement alignées sur les surfaces 2b et 2c de la bague extérieure 2, et un chemin de roulement toroïdal 3d formé dans une surface extérieure cylindrique, une rangée d'éléments roulants 4, ici des billes, disposés entre les chemins de roulement 2d et 3d, une cage 5 de maintien de l'espacement circonférentiel des éléments roulants 4, réalisée en tôle, un joint d'étanchéité 6 disposé entre la cage 5 et le plan radial des surfaces frontales 2c et 3c, le joint 6 étant monté dans une rainure annulaire de la bague extérieure 2 et venant frotter sur la surface extérieure cylindrique de la bague intérieure 3, et un ensemble capteur 7. Les bagues extérieure 2 et intérieure 3, les éléments roulants 4 et la cage 5 sont symétriques par rapport à un plan radial passant par le centre des éléments roulants 4. Les bagues extérieure 2 et intérieure 3 peuvent être obtenues, de façon conventionnelle, par usinage à partir d'une portion de tube ou d'une ébauche annulaire.

L'ensemble capteur 7 comprend un capteur 8 et deux anneaux codeurs 9 et 10. Le capteur 8 comprend un bloc capteur 11 réalisé en matériau synthétique, de forme générale annulaire, avec une sortie de câble 12 pour un câble 13. La sortie de câble 12 forme une protubérance radiale vers l'extérieur et occupe un secteur angulaire limité.

Le bloc capteur 11 est supporté par la bague extérieure 2 par l'intermédiaire d'une coupelle métallique 14 comprenant une portion axiale 14a de grand diamètre affleurant sensiblement la surface extérieure 2a de la bague extérieure 2 et légèrement rabattue sur le bloc capteur 11 vers l'intérieur à son extrémité libre opposée à ladite bague extérieure 2 pour assurer la retenue axiale dudit bloc capteur 11, une portion radiale 14b disposée axialement entre le bloc capteur 11 et la surface radiale 2b de la bague extérieure 2 et un rabat annulaire 14c s'étendant à partir de l'extrémité de petit diamètre de la portion radiale 14b et venant en saillie dans une rainure annulaire de la bague extérieure 2 symétrique à la rainure annulaire dans laquelle est monté le joint d'étanchéité 6 disposé par rapport au plan passant par le centre des éléments roulants 4. Le rabat annulaire 14c peut être formé par roulage ou sertissage. La portion axiale 14a de la coupelle 14 est pourvue d'une fenêtre pour laisser passer la sortie de câble 12 du bloc capteur 11.

Le bloc capteur 11 est pourvu d'une surface radiale 11a disposée à proximité des éléments roulants 4 et de la cage 5 et s'étendant radialement entre le rabat 14c de la coupelle 14 et le codeur 9, et une surface radiale 11b disposée du côté opposé, formant la surface radiale d'extrémité du roulement instrumenté 1 et s'étendant radialement entre l'extrémité libre de la portion axiale 14a de la coupelle 14 et le codeur 10. Un léger entrefer radial sépare les codeurs 9 et 10 de l'alésage 11c du bloc capteur 11. Le capteur 8 comprend un premier groupe d'éléments capteurs 15 disposés en regard du codeur 9 et angulairement décalés les uns par rapport aux autres, et un deuxième groupe d'éléments capteurs 16 axialement décalés par rapport au premier groupe, disposés en regard du codeur 10 et angulairement décalés les uns par rapport aux autres. Chaque groupe d'éléments capteurs 15, 16 comprend au moins un capteur. En pratique, on prévoira de préférence au moins deux éléments capteurs afin de pouvoir détecter le sens de la rotation et mesurer les déplacements angulaires du codeur. On pourra par exemple utiliser deux cellules à effet Hall disposées en regard d'un anneau multipolaire, lesdites cellules étant décalées angulairement l'une par rapport à l'autre, de telle sorte que le déphasage entre les signaux émis par chaque cellule permette de déterminer le sens de la rotation, la fréquence et le nombre d'impulsions permettant de mesurer la vitesse et le déplacement angulaire.

Une carte 36 comportant un ou plusieurs circuits imprimés est noyée dans le bloc capteur 11 et permet le traitement des signaux émis par les capteurs qui sont reliés électriquement par des fils à ladite carte. Un câble de sortie 13 assure la liaison électrique entre le circuit du bloc capteur et une unité d'exploitation extérieure.

L'extrémité, non représentée du câble de sortie 13, peut être reliée à une unité électronique de traitement permettant de déduire des signaux de sortie des capteurs, la vitesse de rotation de chaque codeur, la position de chaque codeur, le sens de rotation, etc. Le premier groupe d'éléments capteurs 15 est disposé à proximité des éléments roulants 4. Le deuxième groupe d'éléments capteurs 16 est disposé à proximité de la surface radiale 11b du bloc capteur 11.

Les codeurs 9 et 10 présentent une structure similaire avec une partie active 17, 18 et une coupelle de support 19, 20. Les parties actives 18 et 19 peuvent être identiques, ce qui est économiquement avantageux, et se présenter sous la forme d'un anneau multipolaire aimanté, de section rectangulaire. La coupelle 19 du codeur 9 comprend une portion axiale 19a partiellement emmanchée sur la surface extérieure cylindrique de la bague intérieure 3 et une portion radiale 19b dirigée vers l'intérieur à partir de la portion axiale 19a, ladite portion radiale 19b étant en contact avec la surface radiale 3b de la bague intérieure 3. Le codeur 9 est ainsi fixé sur la bague intérieure 3 par l'emmanchement de la portion axiale 19a et positionné précisément par rapport à ladite bague intérieure 3 par la portion radiale 19b. La partie active 17 est fixée sur la surface extérieure de la portion axiale 19a, par exemple par surmoulage.

La coupelle 20 du codeur 10 comprend une portion axiale 20a similaire à la portion axiale 19a et se prolongeant vers l'intérieur par une portion radiale 30b s'étendant vers l'intérieur au-delà de l'alésage 3a de la bague intérieure 3 et se terminant par une portion cylindrique 20c s'étendant axialement à l'opposé de la portion axiale 20a. Bien entendu, les coupelles 19 et 20 sont de forme annulaire.

À l'état non monté, illustré sur la figure 2, le codeur 10 est retenu avec le reste du roulement instrumenté 1 par la partie active 18 interagissant magnétiquement avec la partie active 17 avec attraction mutuelle des pôles de polarité opposées desdites parties actives. Préférablement, les pôles des parties actives 17 et 18 occupent les secteurs angulaires sensiblement égaux et lesdites parties actives 17 et 18 présentent des diamètres intérieur et extérieur sensiblement égaux.

À l'état monté, illustré sur la figure 1, la bague extérieure 2 du roulement instrumenté 1 est emmanchée dans un logement 21 pourvu d'un alésage 21a limité par un épaulement 21b, la sortie de fil 12 faisant saillie à proximité de l'extrémité dudit logement 21. La bague intérieure 3 est emmanchée sur un arbre creux 22 formant un arbre extérieur. La portion axiale 20c de la coupelle 20 du codeur 10 est emmanchée sur un arbre intérieur 23 disposé à l'intérieur de l'arbre creux 22 et pourvu d'un épaulement 23a contre lequel la portion radiale 20b de la coupelle 20 est en contact. Le codeur 10 est ainsi parfaitement positionné par rapport à l'arbre intérieur 23.

Comme on peut le voir sur la figure 1, les codeurs 9 et 10 sont séparés par un léger espace axial et sont en regard respectivement des groupes d'éléments capteurs 15 et 16 avec lesquels ils coopèrent magnétiquement, en ce sens que chaque groupe d'éléments capteurs 15, 16 voit défiler un champ magnétique alternatif lors de la rotation du codeur correspondant 9, 10.

Ainsi, un capteur 8, pourvu d'un unique bloc capteur 11, est capable de détecter la rotation de deux éléments tournants distincts et concentriques, susceptibles de tourner à des vitesses différentes.

À titre de variante, on pourrait prévoir que les parties actives des codeurs présentent des diamètres différents, ou encore que l'un des entrefers, ou les deux, soient axiaux. Toutefois, il est particulièrement avantageux que le codeur supplémentaire 10 se maintienne magnétiquement sur le codeur 9 avant le montage sur leurs supports respectifs définitifs.

Dans le mode de réalisation illustré sur la figure 3, le roulement instrumenté 1 est semblable à celui illustré sur les figures 1 et 2, à ceci près que l'arbre creux 22 et l'arbre intérieur 23 présentent une différence de diamètre plus importante, laissant un espace radial entre le diamètre extérieur de l'arbre intérieur 23 et l'alésage de l'arbre creux 22, dans lequel est disposé un roulement 24, de structure analogue à celle du roulement 1 tout en présentant une longueur axiale, un diamètre d'éléments roulants, et un diamètre extérieur plus petit.

Le roulement 24 comprend une bague intérieure 25, une bague extérieure 26, une rangée d'éléments roulants 27, par exemple des billes, une cage 28 et un joint d'étanchéité 29. Les bagues 25 et 26 présentent respectivement sur leur surface extérieure cylindrique et sur leur alésage, des chemins de roulement concaves en contact avec les éléments roulants 27. La cage 28 assure l'espacement circonférentiel régulier des éléments roulants 27. Le joint d'étanchéité 29 est monté dans une rainure de la bague extérieure 26 et vient frotter sur une portée axiale de la bague intérieure 25. La bague extérieure 26 est emmanchée dans l'alésage de l'arbre creux 22. La bague intérieure 23 est emmanchée sur l'arbre intérieur 23 et est en contact par une surface radiale frontale avec l'épaulement 23a, à proximité du joint d'étanchéité 29.

La coupelle 20 supportant la partie active 18 du codeur 10 présente une forme annulaire à section générale en C avec une portion radiale 20b relativement étendue et passant à une faible distance d'une extrémité axiale de l'arbre creux 22 et d'une surface radiale frontale de la bague extérieure 26 du roulement 24 du côté opposé au joint d'étanchéité 29. Une portion axiale 20d, de petit diamètre, issue de l'extrémité correspondante de la portion radiale 20b, s'étend en direction des éléments roulants 27 et est emmanchée sur une portée axiale de la bague intérieure 25 symétrique à la portée axiale en contact avec la lèvre du joint d'étanchéité 29 par rapport à un plan radial passant par le centre des éléments roulants 27.

Le roulement instrumenté 1, avant montage, comprend, outre le capteur 8 et le codeur 9, également le codeur 10 dont la partie active 18 est maintenue magnétiquement contre la partie active 17 du codeur 9. En outre, l'étanchéité du roulement 24 est assurée de façon efficace dans la mesure où le codeur 10 forme une chicane, une éventuelle impureté extérieure devant d'abord passer dans l'entrefer entre la partie active 18 du codeur 10 et le bloc capteur 11, puis dans l'espace axial étroit séparant les parties actives 17 et 18, puis entre les coupelles 19 et 20, entre l'extrémité libre de l'arbre creux 22 et la partie radiale 20b de la coupelle 20 pour parvenir à proximité des éléments roulants 27. On comprend que la probabilité d'un tel événement est très faible. En outre, il est possible de prévoir des chicanes ou des étanchéités frottantes supplémentaires, par exemple supportées par la coupelle 20.

Le mode de réalisation illustré sur la figure 3 propose donc un codeur supporté par une bague d'un premier roulement, un capteur supporté par l'autre bague du même roulement et un codeur supplémentaire supporté par l'une des bagues d'un autre roulement.

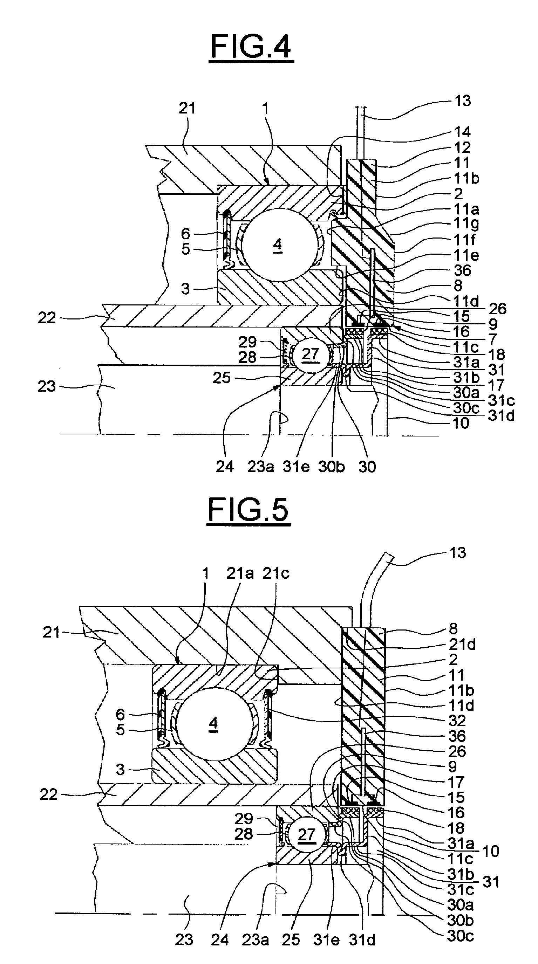

Le mode de réalisation illustré sur la figure 4 se rapproche de celui illustré sur la figure 3, en ce sens qu'il est prévu deux roulements 1 et 24. Le codeur 8 comprend un bloc capteur 11 de forte dimension radiale, dont l'alésage est sensiblement égal à l'alésage de l'arbre creux 22 à proximité du roulement 24.

Plus précisément, le bloc capteur 11 comprend deux surfaces radiales 11a et 11d disposées du côté des éléments roulants 4 et légèrement décalées axialement par un épaulement 11e. La surface radiale 11a est située entre les bagues extérieure 2 et intérieure 3. L'épaulement 11e est situé à proximité de la surface axiale extérieure de la bague intérieure 3. La surface radiale 11d, de diamètre inférieur à la surface radiale 11a, est située au voisinage de la surface radiale frontale 3b de la bague intérieure 3 et de l'extrémité libre de l'arbre creux 22. Du côté opposé aux éléments roulants 4, le bloc capteur 11 comprend une surface radiale 11b de grand diamètre, une surface radiale 11f de petit diamètre décalée axialement par rapport à la surface radiale de grand diamètre 11b par l'intermédiaire d'un chanfrein 11g. Le chanfrein 11g est situé radialement sensiblement entre l'alésage de la bague extérieure 2 et le cercle fictif passant par le centre des éléments roulants 4. La surface radiale 11f de petit diamètre s'étend jusqu'à l'alésage 11c et est plus éloignée du plan radial passant par les surfaces frontales 2b et 3b des bagues 2 et 3, de façon que l'alésage 11c présente une longueur axiale suffisante pour y disposer les groupes d'éléments capteurs 15 et 16.

Le codeur 9 comprend une partie active 17 de dimension radiale plus faible que dans les modes de réalisation précédents, radialement située au niveau de la bague extérieure 26 du roulement 24, et une coupelle de support 30 de forme annulaire pourvue d'une portion axiale 30a en contact avec la partie active 17, d'une portion axiale 30b emmanchée dans l'alésage de la bague extérieure 26, les portions axiales 30a et 30b étant reliées par une courte portion radiale 30c en contact avec la surface radiale frontale de la bague extérieure 26 du côté opposé au joint d'étanchéité 29, assurant ainsi le positionnement axial précis du codeur 9 par rapport au roulement 24.

Le codeur 10 comprend une partie active 18, de forme identique à la partie active 17, et une coupelle 31 annulaire comprenant une portion axiale 31a supportant la partie active 18, une portion radiale 31b s'étendant vers l'intérieur à partir de la portion axiale 31 a, une portion axiale 31c s'étendant en direction des éléments roulants 27 à partir de l'extrémité de petit diamètre de la portion radiale 31b et située axialement au niveau de la partie active 17 du codeur 9, une portion radiale 31d formée par un pli de tôle et présentant donc une double épaisseur, disposée en contact avec la surface frontale radiale de la bague intérieure 25 du côté opposé au joint d'étanchéité 29 et se prolongeant par une portion axiale 31e emmanchée sur la surface extérieure cylindrique de la bague intérieure 25 et présentant un diamètre égal à celui de la portion axiale 31c.

L'étanchéité du roulement 1 est assurée par un passage étroit entre l'alésage 11c et les parties actives 17 et 18 des codeurs 9 et 10, un passage étroit entre la surface 11d et l'extrémité libre de l'arbre creux 22 d'une part, et la bague intérieure 3 d'autre part, et un passage étroit entre l'épaulement 11e et la surface extérieure de la bague intérieure 3. Une étanchéité par passage étroit est également très bien assurée pour le roulement 24, entre la partie active 18 du codeur 10 et l'alésage 11c du bloc capteur 11 et entre les deux codeurs 9 et 10.

Le mode de réalisation illustré sur la figure 4 propose donc un capteur 8 solidaire d'une bague d'un premier roulement, un codeur solidaire d'une bague d'un autre roulement et un autre codeur solidaire de l'autre bague dudit autre roulement.

Dans le mode de réalisation illustré sur la figure 5, le roulement 24 et les codeurs 9 et 10 sont semblables à ceux illustrés sur la figure 4. Le roulement 1 est de type conventionnel non instrumenté, pourvu d'un joint d'étanchéité 32 symétrique au joint d'étanchéité 6 par rapport au plan radial passant par le centre des éléments roulants 4. La bague extérieure 2 est emmanchée dans un alésage 21 a limité par un épaulement 21c opposé à l'épaulement 21b du mode de réalisation illustré sur les figures précédentes. Le logement 21 comprend en outre un court rebord axial 21d disposé à proximité de son extrémité libre et supportant directement le bloc capteur 11 du capteur 8 en l'absence de coupelle de support.

Le bloc capteur 11 se présente sous la forme d'un anneau à section rectangulaire. Le câble 13 sort directement de la surface extérieure du bloc capteur 11. Par ailleurs, le bloc capteur 11 comprend une surface radiale 11d du côté du roulement 1, une surface radiale 11b parallèle à 1a surface radiale 11d du côté opposé au roulement 1 et un alésage 11c. Le bloc capteur 11 s'étend radialement entre le rebord radial 21d du logement 21 et sensiblement l'alésage de l'arbre creux 22, en laissant un faible espace axial entre l'extrémité libre de l'arbre creux 22 et la surface radiale 11d. Les groupes d'éléments capteurs 15 et 16 sont disposés en face des parties actives 17 et 18 des codeurs 9 et 10. On peut ainsi utiliser un roulement conventionnel de faible coût entre le logement 21 et l'arbre creux 22. Les codeurs 9 et 10 fixés sur le roulement 24 ne risquent pas de se perdre ou d'être séparés accidentellement des bagues de roulement 24 lors de manipulation ou du transport.

On dispose ainsi d'un système dans lequel le capteur est supporté par un élément stationnaire, un premier codeur est supporté par une bague d'un roulement et un deuxième codeur est supporté par l'autre bague du même roulement.

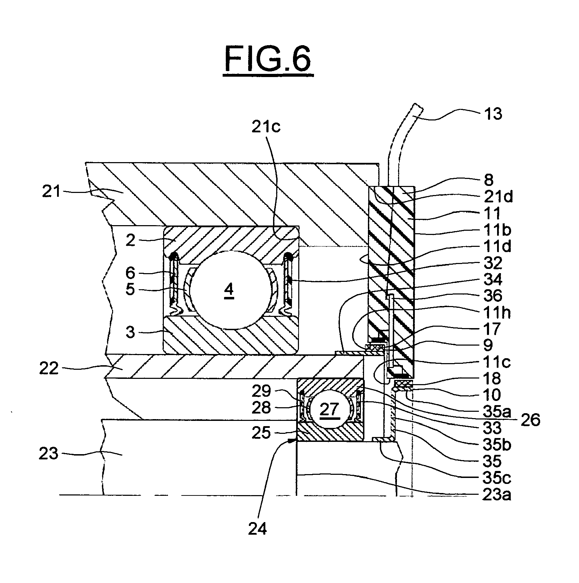

Le mode de réalisation illustré sur la figure 6 se rapproche du précédent, à ceci près que les roulements 1 et 24 sont tous deux de type conventionnel, le roulement 24 étant pourvu d'un joint d'étanchéité 33 symétrique au joint d'étanchéité 29 par rapport au plan radial passant par le centre des éléments roulants 27. Le codeur 9 comprend une partie active 17, de diamètre légèrement supérieur à celui du mode de réalisation précédent et une coupelle de support 34 se présentant sous la forme d'un simple anneau axial réalisé en tôle emmanché sur la surface extérieure de l'arbre creux 22, partiellement en saillie axiale au-delà de l'extrémité libre dudit arbre creux 22. Alternativement, la coupelle de support 34 peut être pourvue d'un pli de tôle radial dirigé vers l'extérieur ou encore axial à partir de son extrémité libre opposée au roulement 4, pour former une butée assurant un positionnement précis dans le sens axial par rapport à l'arbre creux 22.

Le codeur 10 comprend une partie active 18, identique à celle du mode de réalisation illustré sur la figure 5, et une coupelle 35 annulaire comprenant une portion axiale 35a supportant la partie active 18, une portion radiale 35b s'étendant vers l'intérieur à partir de la portion axiale 35a et une portion axiale 35c de petit diamètre s'étendant en direction du roulement 24 à partir de l'extrémité de petit diamètre de la portion radiale 35b et étant emmanchée sur l'arbre 23 à proximité de la bague intérieure 25 du roulement 24.

À titre de variante, l'on pourrait prévoir une coupelle 35 à section générale en C avec une branche axiale de petit diamètre emmanchée sur l'arbre 23, une branche radiale disposée à très faible distance des surfaces frontales radiales des bagues 25 et 26 du roulement 24 et une branche extérieure axiale relativement allongée formant un passage étroit avec la bague extérieure 26 du roulement 24.

Le capteur 8 est similaire à celui illustré sur la figure 5, à ceci près que les groupes de capteurs 15 et 16 sont décalés radialement l'un par rapport à l'autre, le codeur 9 présentant un diamètre extérieur supérieur au diamètre extérieur du codeur 10. Le bloc capteur 11 comprend donc un alésage 11c de faible diamètre situé en regard de la partie active 18 du codeur 10 et un alésage 11 h de grand diamètre situé en regard de la partie active 17 du codeur 9.

À titre de variante, l'on pourrait prévoir une coupelle 35 pourvue d'une portion radiale 35b de très grande dimension, de façon que les deux codeurs 9 et 10 présentent des diamètres extérieurs identiques et que le bloc capteur 11 soit de section rectangulaire avec un alésage unique et non plus des alésages 11c et 11h décalés radialement.

Le mode de réalisation illustré sur la figure 6 propose donc un capteur 8 supporté par un élément stationnaire, un premier codeur supporté par un premier élément tournant et un deuxième codeur supporté par un deuxième élément tournant, les premier et deuxième éléments tournants étant susceptibles de se déplacer à des vitesses angulaires différentes. Ce mode de réalisation est particulièrement économique, dans la mesure où les roulements 1 et 24 peuvent être les roulements conventionnels fabriqués en très grandes séries à faible coût.

Grâce à l'invention, on dispose d'un ensemble mécanique comprenant deux arbres tournants coaxiaux, susceptibles d'avoir des vitesses angulaires différentes et dont on mesure les vitesses respectives au moyen de deux codeurs et d'un bloc capteur unique. Plus généralement, on peut prévoir n codeurs pour n éléments tournants coaxiaux coopérant avec un unique bloc capteur supportant n groupes d'éléments capteurs. L'encombrement est ainsi réduit grâce au regroupement d'une pluralité de groupes d'éléments capteurs dans un seul bloc capteur et à la présence d'un câble unique 13 en remplacement de plusieurs câbles.

L'invention s'applique plus particulièrement dans le domaine des boîtes de vitesses de véhicules automobiles ou d'engins.

## Revendications

1. Dispositif de détection de paramètres de rotation de deux éléments tournants coaxiaux et susceptibles d'avoir un déplacement angulaire relatif autour dudit axe, le dispositif comprenant deux groupes d'éléments capteurs (15, 16) en vue de la détection dudit déplacement angulaire de chaque élément, les deux groupes d'éléments capteurs étant logés dans un même bloc capteur (11) non tournant, chaque groupe d'éléments capteurs (15, 16) coopérant avec un anneau codeur (9, 10) monté sur l'un des éléments tournants, les deux anneaux étant distincts et indépendants l'un de l'autre et pouvant se déplacer angulairement l'un par rapport à l'autre autour de l'axe géométrique desdits éléments tournants.

2. Dispositif selon la revendication 1, **caractérisé par le fait que** le bloc capteur (11) est monté sur une bague (2) d'un roulement (1), qu'un anneau codeur (9) est monté sur l'autre bague (3) du roulement (1) et qu'un anneau codeur (10) est monté sur un élément extérieur au roulement.

3. Dispositif selon la revendication 2, **caractérisé par le fait que** l'élément extérieur est un arbre (23).

4. Dispositif selon la revendication 2, **caractérisé par le fait que** l'élément extérieur est un deuxième roulement (24).

5. Dispositif selon la revendication 1, **caractérisé par le fait que** le bloc capteur (11) est monté sur l'une des bagues (2) d'un roulement (1), qu'un anneau codeur (9) est monté sur l'une des bagues (26) d'un deuxième roulement (24) et qu'un anneau codeur est monté sur l'autre bague (25) du deuxième roulement (24).

6. Dispositif selon la revendication 1, **caractérisé par le fait que** le bloc capteur (11) est monté sur un élément non tournant (21), qu'un anneau codeur (9) est monté sur l'une des bagues (26) d'un deuxième roulement (24) et qu'un anneau codeur (10) est monté sur l'autre bague (25) du deuxième roulement (24).

7. Dispositif selon la revendication 1, **caractérisé par le fait que** le bloc capteur (11) est monté sur un élément non tournant (21), qu'un anneau codeur (9) est monté sur un premier arbre tournant (22) autour d'un axe géométrique et qu'un anneau codeur (10) est monté sur un deuxième arbre (23) tournant autour dudit axe géométrique.

8. Dispositif selon l'une quelconque des revendications précédentes, **caractérisé par le fait que** les groupes d'éléments capteurs sont reliés électriquement à un circuit de traitement des signaux émis par lesdits capteurs.

9. Dispositif selon la revendication 8, **caractérisé par le fait que** le circuit de traitement des signaux se présente sous la forme d'au moins un circuit imprimé sur au moins une carte (36) intégrée au bloc capteur (11).

10. Dispositif selon l'une quelconque des revendications précédentes, **caractérisé par le fait que** les éléments capteurs sont de type magnéto-sensible et les anneaux codeurs sont multipolaires.

11. Ensemble mécanique comprenant deux arbres (22, 23) tournant autour d'un même axe géométrique et susceptibles d'avoir un déplacement angulaire relatif autour dudit axe, et un dispositif selon l'une quelconque des revendications précédentes.
